# EUROPEAN PATENT APPLICATION

(11) **EP 4 382 826 A1**
(43) Date of publication of application: **12.06.2024**
(21) Application number: 22864407.6
(22) Date of filing: 25.08.2022
(51) Int. Cl.: F24V 30/00

(54) **HEAT GENERATION DEVICE AND HEAT GENERATION ELEMENT COOLING METHOD**

(30) Priority: 02.09.2021 JP 2021143527
(71) Applicant: Clean Planet Inc., Minato-ku Tokyo 105-0022 (JP)
(72) Inventor: ENDO, Yoshito, Tokyo 105-0022 (JP); IWAMURA, Yasuhiro, Sendai-shi, Miyagi 980-8577 (JP); ITO, Takehiko, Tokyo 105-0022 (JP); YOSHINO, Hideki, Tokyo 105-0022 (JP)
(74) Representative: Bandpay & Greuter
(86) International application number: PCT/JP2022/032126
(87) International publication number: WO 2023/032823

(57) **Abstract**

Provided are a heat generating device capable of rapidly cooling a heat generating element and a method for cooling a heat generating element. A heat generating device 1 includes: a heat generating element 5 that is capable of occluding hydrogen and generating heat using a heat generating reaction by quantum diffusion of the hydrogen; a heater 6 that heats the heat generating element 5 to cause quantum diffusion of the hydrogen in the heat generating element 5; a container 2 that accommodates the heat generating element 5 and the heater 6; a heat removal medium circulation unit 35 that circulates a heat removal medium through a circulation path 33 provided on an outer periphery of the container 2; an inert gas supply unit 41 that supplies an inert gas for cooling the heat generating element 5 into the container 2; a coolant supply unit 51 that supplies a coolant for cooling the heat generating element 5 into the container 2; and a container opening unit 61 that opens the container 2.

## Description

### Technical Field

The present invention relates to a heat generating device and a method for cooling a heat generating element.

### Background of Art

It has been proposed to use a hydrogen storage alloy such as a palladium alloy to occlude hydrogen, so as to obtain thermal energy by utilizing a heat generating reaction that occurs during quantum diffusion of hydrogen. Patent Literature 1 discloses that a heat generating element that occludes hydrogen is heated by a heater and evacuated to cause quantum diffusion of hydrogen, thereby generating excess heat higher than a heating temperature by the heater.

### Citation List

### Patent Literature

Patent Literature 1: JP2019-168221A

### Summary of Invention

### Technical Problem

In a heat generating device disclosed in Patent Literature 1, during steady operation, a temperature of a heat generating element is controlled within a predetermined range by controlling the heat generating reaction in the heat generating element by repeatedly activating and stopping the heater.

However, an amount of heat generated by the heat generating element may become too large due to various reasons. In this case, simply stopping the heater cannot stop the heat generating reaction in the heat generating element, and the temperature of the heat generating element may continue to rise, causing melting of the heat generating element.

Therefore, an object of the present invention is to provide a heat generating device capable of rapidly cooling a heat generating element and a method for cooling a heat generating element.

### Solution to Problem

A heat generating device according to the present invention includes: a heat generating element that is capable of occluding hydrogen and generating heat using a heat generating reaction by quantum diffusion of the hydrogen; a heater that heats the heat generating element to cause quantum diffusion of the hydrogen in the heat generating element; a container that accommodates the heat generating element and the heater; a heat removal medium circulation unit that circulates a heat removal medium through a circulation path provided on an outer periphery of the container; an inert gas supply unit that supplies an inert gas for cooling the heat generating element into the container; a coolant supply unit that supplies a coolant for cooling the heat generating element into the container; and a container opening unit that opens the container.

The present invention also provides a method for cooling a heat generating element that is capable of occluding hydrogen and generating heat using a heat generating reaction by quantum diffusion of the hydrogen caused by heat from a heater, the method including: increasing a flow rate of a heat removal medium circulating through a circulation path provided on an outer periphery of a container that accommodates the heat generating element; supplying an inert gas for cooling the heat generating element into the container after increasing the flow rate of the heat removal medium; and opening the container and supplying a coolant for cooling the heat generating element into the container after supplying the inert gas into the container.

### Advantageous Effects of Invention

The present invention can provide a heat generating device capable of rapidly cooling a heat generating element and a method for cooling a heat generating element.

### Brief Description of Drawings

Fig. 1 is a schematic diagram showing a configuration of a heat generating device according to the present invention.
Fig. 2A is a cross-sectional view showing a cross-sectional configuration of a heat generating element. Fig. 2B is a schematic diagram for explaining excess heat generated in a multilayer film.
Fig. 3 is an explanatory diagram for explaining a heat generating element of a first modification including a first layer, a second layer, and a third layer.
Fig. 4 is an explanatory diagram for explaining a heat generating element of a second modification including a first layer, a second layer, a third layer, and a fourth layer.

### Description of Embodiments

Hereinafter, an embodiment of the present invention will be described in detail based on the drawings.

### (1) Overall Configuration of Heat Generating Device of Present Invention

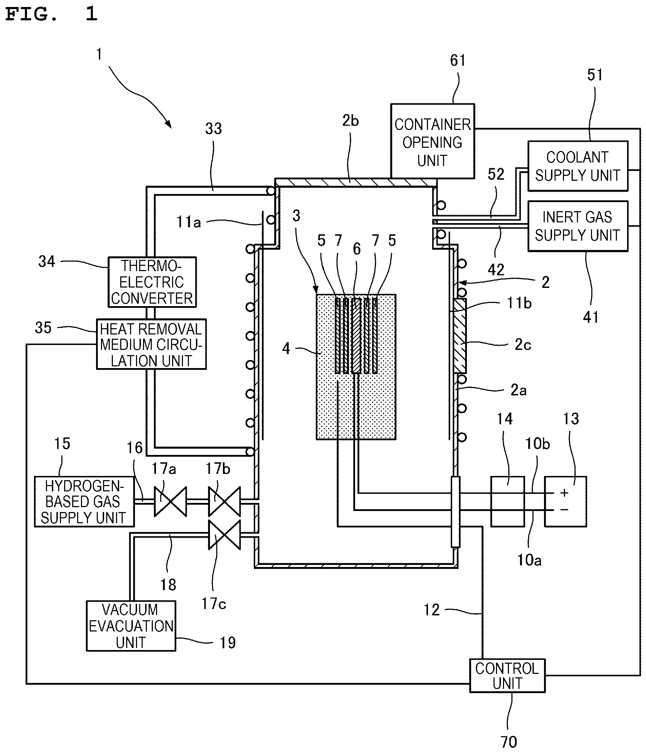

Fig. 1 is a schematic diagram showing a configuration of a heat generating device 1 of the present invention. As shown in Fig. 1, the heat generating device 1 includes a container 2 into which a hydrogen-based gas that contributes to heat generation is introduced, and a heat generating structure 3 provided inside the container 2. In the heat generating device 1, after the hydrogen-based gas is introduced into the container 2, a heat generating element 5 (described later) in the heat generating structure 3 is heated by a heater 6, so that the heat generating element 5 generates excess heat exceeding a heating temperature. As the hydrogen-based gas introduced into the container 2, a deuterium gas and/or a natural hydrogen gas can be used. Note that the natural hydrogen gas refers to a hydrogen-based gas containing 99.985% or more of protium gas.

The container 2 is made of, for example, stainless steel (SUS306 or SUS316). The container 2 includes a cylindrical container body 2a and a lid 2b provided on the container body 2a for opening and closing an opening of the container body 2a. When the lid 2b is in a state where the opening of the container body 2a is closed, an interior of the container 2 can be made into a closed space. When the lid 2b is in a state where the opening of the container body 2a is opened, the container 2 is opened. The container body 2a includes a window 2c formed of a transparent member such as Kovar glass, so that an operator can directly visually check the inside of the container 2 while maintaining a sealed state of the container 2.

The container body 2a is connected to a hydrogen-based gas supply unit 15 via a hydrogen-based gas introduction path 16. Although not shown, the hydrogen-based gas supply unit 15 includes, for example, a tank that stores the hydrogen-based gas, a pump that sends out the hydrogen-based gas stored in the tank to the hydrogen-based gas introduction path 16, and the like. The hydrogen-based gas supply unit 15 introduces the hydrogen-based gas into the container 2 through the hydrogen-based gas introduction path 16. When a certain amount of the hydrogen-based gas is stored inside the container 2, adjustment valves 17a and 17b provided in the hydrogen-based gas introduction path 16 are closed, and introduction of the hydrogen-based gas from the hydrogen-based gas introduction path 16 to the inside of the container 2 is stopped.

The container body 2a is connected to a vacuum evacuation unit 19 via an evacuation path 18. Although not shown, the vacuum evacuation unit 19 includes, for example, a dry pump. By driving the vacuum evacuation unit 19, the gas inside the container 2 is evacuated to the outside of the container 2 through the evacuation path 18. In this way, in the heat generating device 1, vacuum evacuation, pressure adjustment, and the like of the container 2 can be performed. The evacuation path 18 is provided with an adjustment valve 17c, and when the adjustment valve 17c is closed, the evacuation of gas from the container 2 is stopped.

The container 2 is provided with a plurality of temperature measurement units 11a, 11b, and 12, and the temperature inside the container 2 can be measured by the temperature measurement units 11a, 11b, and 12. In this embodiment, the temperature measurement units 11a and 11b are provided along an inner wall of the container body 2a, and can measure a temperature of the inner wall. The temperature measurement unit 12 is provided on a holder 4 that holds the heat generating element 5 in the heat generating structure 3, and can measure a temperature of the holder 4.

The heater 6 is, for example, a plate-shaped ceramic heater. The heater 6 is connected to an external heating power supply 13 via wirings 10a and 10b, and heats the heat generating element 5 to a predetermined temperature. The heater 6 has a built-in thermocouple, and can measure a temperature using the thermocouple. In the heater 6, substrates 7 made of, for example, SiO₂ are provided on opposing planes, and plate-shaped heat generating bodies 5 are provided on surfaces of these substrates 7, respectively. Therefore, the heat generating structure 3 has a configuration in which the heater 6 is sandwiched between the heat generating bodies 5 with the substrates 7 in between. An ammeter-voltmeter 14 is provided on the wirings 10a and 10b, and an input current and an input electric power applied to the heater 6 are measured by the ammeter-voltmeter 14. The heating temperature when heating the heat generating element 5 with the heater 6 varies depending on a type of a hydrogen storage metal that constitutes the heat generating element 5, but is at least 300°C or higher, preferably 500°C or higher, and more preferably 600°C or higher.

A circulation path 33 is spirally provided around an outer periphery of the container body 2a. A heat removal medium heated by the heat generated by the heat generating element 5 circulates through the circulation path 33. The circulation path 33 may include a high temperature side path provided adjacent to the container body 2a and a low temperature side path provided outside the high temperature side path.

The circulation path 33 is provided with a thermoelectric converter 34 that thermoelectrically converts the heat of the heated heat removal medium. The circulation path 33 is provided with a heat removal medium circulation unit 35 that causes the heat removal medium to circulate through the circulation path 33. Although not shown, the heat removal medium circulation unit 35 includes, for example, a pump that sends out the heat removal medium to the circulation path 33. A flow rate of the heat removal medium circulating through the circulation path 33 can be changed by the heat removal medium circulation unit 35. As the heat removal medium, a gas or a liquid can be used, and one that has excellent thermal conductivity and is chemically stable is preferable. As the gas, for example, helium gas, argon gas, hydrogen gas, nitrogen gas, water vapor, air, carbon dioxide, and the like can be used. As the liquid, water, molten salt (KNO₃ (40%)-NaNO₃ (60%), and the like), liquid metals (Pb and the like), and the like can be used. As the heat removal medium, a mixed phase heat removal medium in which solid particles are dispersed in a gas or a liquid may be used. Examples of the solid particles include metals, metal compounds, alloys, and ceramics. Examples of the metals include copper, nickel, titanium, and cobalt. Examples of the metal compounds include oxides, nitrides, silicides, and the like of the above metals. Examples of the alloys include stainless steel, and chromium molybdenum steel. Examples of the ceramics include alumina. Note that when the circulation path 33 includes the high temperature side path and the low temperature side path, different heat removal media may be circulated in the high temperature side path and the low temperature side path.

### (2) Regarding Heat Generating Element

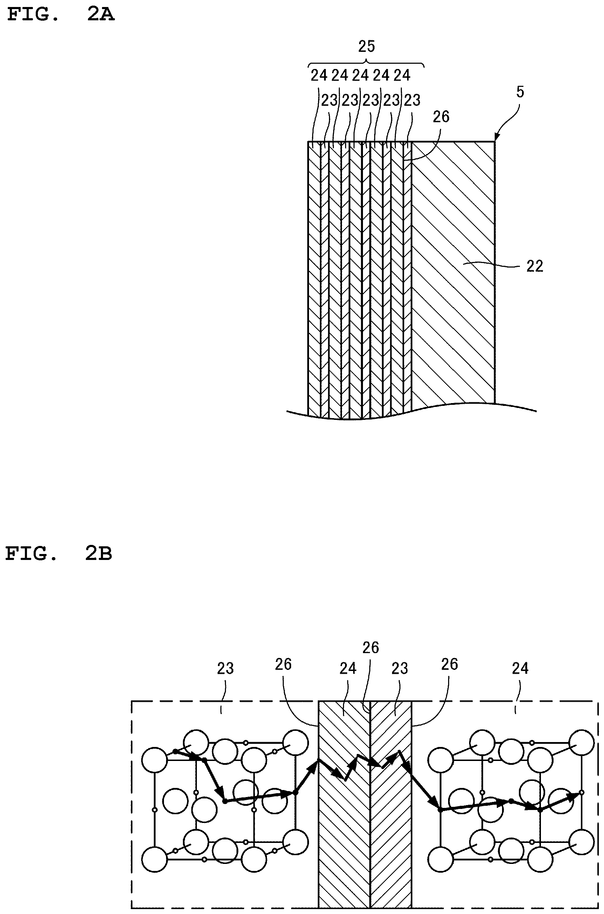

Next, the heat generating element 5 will be explained with reference to Fig. 2A and Fig. 2B. Fig. 2A is a cross-sectional view showing a cross-sectional configuration of the heat generating element 5, and Fig. 2B is a schematic diagram for explaining the excess heat generated in a multilayer film 25.

As shown in Fig. 2A, the heat generating element 5 includes a base 22 made of a hydrogen storage metal, a hydrogen storage alloy, or a proton conductor, and a multilayer film 25 formed on a surface of the base 22. The multilayer film 25 is supported by the base 22. Ni, Pd, V, Nb, Ta, and Ti can be used as the hydrogen storage metal that makes the base 22, and LaNi₅, CaCu₅, MgZn₂, ZrNi₂, ZrCr₂ TiFe, TiCo, Mg₂Ni, and Mg₂Cu can be used as the hydrogen storage alloy that makes the base 22. Examples of the proton conductor include BaCeO₃-based (for example, Ba(Ce_{0.95}Y_{0.05})O_{3-δ}), SrCeO₃-based (for example Sr(Ce_{0.95}Y_{0.05})O_{3-δ}), CaZrO₃-based (for example, CaZr_{0.95}Y_{0.05}O_{3-α}), SrZrO₃-based (for example, SrZr_{0.9}Y_{0.1}O_{3-α}) proton conductors, βAl₂O₃, and βGa₂O₃ proton conductors.

The multilayer film 25 includes a first layer 23 made of a hydrogen storage metal or a hydrogen storage alloy, and a second layer 24 made of a hydrogen storage metal or a hydrogen storage alloy different from the first layer 23, or a ceramic. The first layer 23 and the second layer 24 are alternately stacked, and a heterogeneous material interface 26 is formed between the first layer 23 and the second layer 24.

The first layer 23 is preferably made of, for example, any one of Ni, Pd, Cu, Mn, Cr, Fe, Mg, Co, and alloys thereof. The alloy of the first layer 23 may be an alloy in which an additional element is added to Ni, Pd, Cu, Mn, Cr, Fe, Mg, and Co, and an alloy containing two or more of Co Ni, Pd, Cu, Mn, Cr, Fe, Mg, and Co is particularly preferable.

The second layer 24 is preferably made of, for example, any one of Ni, Pd, Cu, Mn, Cr, Fe, Mg, Co, alloys thereof, and SiC. The alloy of the second layer 24 may be an alloy in which an additional element is added to Ni, Pd, Cu, Mn, Cr, Fe, Mg, and Co, and an alloy containing two or more of Co Ni, Pd, Cu, Mn, Cr, Fe, Mg, and Co is particularly preferable.

As a combination of the first layer 23 and the second layer 24, when types of elements in the combination are expressed as "first layer 23-second layer 24", it is preferably Pd-Ni, Ni-Cu, Ni-Cr, Ni-Fe, Ni-Mg, and Ni-Co. When the second layer 24 is made of a ceramic, it is preferable that "first layer 23-second layer 24" is Ni-SiC.

Since it is preferable that the first layer 23 and the second layer 24 maintain nanostructures that do not exhibit bulk properties, a thickness of the first layer 23 and the second layer 24 is preferably less than 1000 nm. Furthermore, it is more preferable that the thickness of the first layer 23 and the second layer 24 is less than 500 nm so as to maintain nanostructures that completely do not exhibit bulk properties.

The heat generating element 5 has a configuration in which the first layer 23 and the second layer 24 have a nano-sized (less than 1000 nm) film thickness, and the first layer 23 and the second layer 24 are alternately formed, and therefore, hydrogen (hydrogen atoms) can pass through each heterogeneous material interface 26 between the first layer 23 and the second layer 24.

Fig. 2B is a schematic diagram showing that the first layer 23 and the second layer 24 are hydrogen storage metals with a face-centered cubic structure, and showing how hydrogen in a metal lattice in the first layer 23 passes through the heterogeneous material interface 26 and moves into a metal lattice in the second layer 24.

When the hydrogen-based gas is introduced into the container 2 (see Fig. 1), hydrogen (deuterium or protium) is occluded by the multilayer film 25 and the base 22 of the heat generating element 5. Even when the introduction of the hydrogen-based gas into the container 2 is stopped, the multilayer film 25 and the base 22 maintain a state in which hydrogen is occluded. When heating of the heat generating element 5 by the heater 6 (see Fig. 1) is started, the hydrogen occluded in the multilayer film 25 and the base 22 is released, and quantum diffusion occurs during hopping within the multilayer film 25.

It is known that hydrogen is light and hops in a manner of quantum diffusion in hydrogen-occupied sites (octahedral sites or tetrahedral sites) of substance A and substance B. By heating the heat generating element 5 by the heater 6 in a vacuum state, hydrogen passes through the heterogeneous material interface 26 between the first layer 23 and the second layer 24 by quantum diffusion, or hydrogen diffuses in the heterogeneous material interface 26, so that excess heat equal to or higher than the heating temperature is generated in the heat generating element 5. In other words, the heat generating element 5 generates heat using a heat generating reaction that occurs during quantum diffusion of hydrogen.

In the example shown in Fig. 2A and Fig. 2B, a plurality of first layers 23 and a plurality of second layers 24 are alternately stacked, and the multilayer film 25 includes two or more heterogeneous material interfaces 26. The present invention is not limited thereto, and at least one first layer 23 and at least one second layer 24 may be provided, and there may be one heterogeneous material interface 26. In other words, the multilayer film 25 only needs to have one or more heterogeneous material interfaces 26.

The heat generating element 5 shown in Fig. 2A and Fig. 2B can be manufactured as follows. First, the plate-shaped base 22 is prepared, and the hydrogen storage metal or hydrogen storage alloy that makes the first layer 23 or the second layer 24 is made into a vapor phase using an evaporation device, and then the first layer 23 and the second layer 24 are alternately formed as a film on the base 22 by aggregation or adsorption. In this way, the heat generating element 5 can be manufactured.

As the evaporation device for forming the first layer 23 and the second layer 24, a physical evaporation device that vaporizes a hydrogen storage metal or a hydrogen storage alloy by a physical method can be used. The physical vapor deposition device is preferably a sputtering device that deposits the hydrogen storage metal or the hydrogen storage alloy on the base 22 by sputtering, a vacuum evaporation device, or a chemical vapor deposition (CVD) device. The hydrogen storage metal or the hydrogen storage alloy may be deposited on the base 22 by electroplating, and the first layer 23 and the second layer 24 may be formed as a film alternately.

Note that it is preferable that the first layer 23 and the second layer 24 are continuously formed as a film in a vacuum state when manufacturing the heat generating element 5, so that no natural oxide film but only the heterogeneous material interface 26 is formed between the first layer 23 and the second layer 24.

### (3) Regarding Cooling of Heat Generating Element

During steady operation, the heat generating device 1 controls the heat generating reaction in the heat generating element 5 by repeatedly activating and stopping the heater 6, thereby controlling the temperature of the heat generating element 5 within a predetermined range. However, the amount of heat generated by the heat generating element 5 may become too large due to various reasons. In this case, simply stopping the heater 6 cannot stop the heat generating reaction in the heat generating element 5, and the temperature of the heat generating element 5 cannot be lowered.

In the heat generating device 1, the heat generating element 5 can be quickly cooled by the configuration shown below. The configuration for cooling the heat generating element 5 will be described in detail below.

As shown in Fig. 1, the heat generating device 1 includes an inert gas supply unit 41 connected to the container body 2a via an inert gas introduction path 42, a coolant supply unit 51 connected to the container body 2a via a coolant introduction path 52, and a container opening unit 61 coupled to a lid 2b.

Although not shown, the inert gas supply unit 41 includes, for example, a tank that accommodates an inert gas for cooling the heat generating element 5, a pump that sends the inert gas accommodated in the tank out to the inert gas introduction path 42, and the like. The inert gas is introduced into the container 2 through the inert gas introduction path 42 by the inert gas supply unit 41.

When the inert gas is introduced into the container 2, a heat dissipation route from the heat generating element 5 to the inert gas is formed. In other words, a heat dissipation route of the heat generating element 5 is added. As a result, an amount of radiant heat dissipated from the heat generating element 5 increases, and the heat generating element 5 is cooled. The inert gas refers to a gas that is much less reactive than oxygen gas, and includes, for example, nitrogen gas, carbon dioxide gas, helium gas, neon gas, argon gas, krypton gas, xenon gas, and radon gas.

Although not shown, the coolant supply unit 51 includes, for example, a tank that accommodates a coolant for cooling the heat generating element 5, a pump that sends the coolant accommodated in the tank out to the coolant introduction path 52, and the like. The coolant supply unit 51 introduces the coolant into the container 2 through the coolant introduction path 52.

When the coolant is introduced into the container 2, a heat dissipation route from the heat generating element 5 to the coolant is formed. In other words, a heat dissipation route of the heat generating element 5 is added. As a result, an amount of radiant heat dissipated from the heat generating element 5 increases, and the heat generating element 5 is cooled. The coolant has a higher heat capacity than the inert gas, and therefore it has a higher cooling effect than the inert gas. Therefore, the heat generating element 5 can be cooled more rapidly.

The coolant is preferably a zinc-containing solution containing zinc ions (Zn⁺) of 1E-3 mol/dm³ or more. Since zinc has a property of inhibiting the quantum diffusion of hydrogen, by introducing the zinc-containing solution into the container 2, zinc ions are adhered to the surface of the heat generating element 5, so that the quantum diffusion of hydrogen can be stopped, and the heat generating reaction of the heat generating element 5 can be stopped. Therefore, the heat generating element 5 can be cooled more rapidly.

The coolant may be heated during cooling of the heat generating element 5, causing a phase change and being turned into vapor. In this case, if the container 2 is kept in a sealed state, an internal pressure of the container 2 will rise rapidly, and there is a risk that the container 2 will burst.

The container opening unit 61 is provided to prevent the internal pressure of the container 2 from rising rapidly. Although not shown, the container opening unit 61 includes, for example, an actuator that opens and closes the lid 2b. When the lid 2b is opened by the container opening unit 61, the container 2 is opened. By opening the container 2, even if the coolant is turned into vapor, the internal pressure of the container 2 can be prevented from rising rapidly. Therefore, the heat generating element 5 can be cooled without damaging the container 2.

Note that the heat generating element 5 can also be cooled by increasing the flow rate of the heat removal medium circulating through the circulation path 33 using the heat removal medium circulation unit 35. Specifically, since an outer wall of the container 2 is cooled by increasing the flow rate of the heat removal medium, the amount of radiant heat dissipated from the heat generating element 5 increases. As a result, the heat generating element 5 is cooled.

As described above, the heat generating device 1 includes the heat removal medium circulation unit 35, the inert gas supply unit 41, the coolant supply unit 51, and the container opening unit 61. Therefore, even when the amount of heat generated by the heat generating element 5 becomes too large, the amount of radiant heat dissipated from the heat generating element 5 can be increased. Therefore, the heat generating element 5 can be cooled rapidly.

The heat generating device 1 further includes a control unit 70 that controls the heat removal medium circulation unit 35, the inert gas supply unit 41, the coolant supply unit 51, and the container opening unit 61. The control unit 70 is a microcomputer equipped with, for example, a central processing unit (CPU) that executes a control program and the like, a readonly memory (ROM) that stores the control program executed by the CPU, and a random access memory (RAM) that stores calculation results of the CPU. The control unit 70 may be implemented by one microcomputer or a plurality of microcomputers.

The control unit 70 controls the heat removal medium circulation unit 35, the inert gas supply unit 41, the coolant supply unit 51, and the container opening unit 61 in stages according to the temperature measured by the temperature measurement unit 12.

Specifically, when the temperature measured by the temperature measurement unit 12 reaches a predetermined first threshold, the control unit 70 causes the heat removal medium circulation unit 35 to increase the flow rate of the heat removal medium. In this way, the container 2 is cooled and the amount of radiant heat dissipated from the heat generating element 5 is increased. Therefore, the rise in temperature of the heat generating element 5 that exceeds the first threshold can be slowed down.

When the temperature measured by the temperature measurement unit 12 reaches a second threshold larger than the first threshold, the control unit 70 causes the inert gas supply unit 41 to supply the inert gas into the container 2. As a result, a heat dissipation route of the heat generating element 5 is added, and the amount of radiant heat dissipated from the heat generating element 5 is further increased. Therefore, the rise in temperature of the heat generating element 5 that exceeds the second threshold can be further slowed down.

When the temperature measured by the temperature measurement unit 12 reaches a third threshold larger than the second threshold, the control unit 70 causes the container opening unit 61 to open the container 2, and causes the coolant supply unit 51 to supply the coolant into the container 2. Since the coolant has a larger heat capacity than the inert gas, the amount of radiant heat dissipated from the heat generating element 5 further increases. Therefore, the heat generating element 5 can be cooled rapidly.

Before the coolant is introduced, the rise in the temperature of the heat generating element 5 is slowed down by the heat removal medium circulation unit 35 and the inert gas supply unit 41. Therefore, when the heat generating element 5 is cooled by the coolant, rapid heating of the coolant can be prevented. Therefore, vaporization of the coolant can be prevented.

Furthermore, when introducing the coolant, the container 2 is opened by the container opening unit 61. Therefore, a sudden increase in the internal pressure of the container 2 due to vaporization of the coolant can be prevented. Therefore, the heat generating element 5 can be cooled without damaging the container 2.

In vapor control, if the temperature measured by the temperature measurement unit 12 starts to drop before reaching the second threshold, that is, if the heat generation of the heat generating element 5 stops simply by increasing the flow rate of the heat removal medium, no inert gas supply is required. Similarly, if the temperature measured by the temperature measurement unit 12 starts to drop before reaching the third threshold, that is, if the heat generation of the heat generating element 5 stops simply by supplying the inert gas into the container 2, no coolant supply is required.

Note that the control unit 70 is not limited to controlling the heat removal medium circulation unit 35, the inert gas supply unit 41, the coolant supply unit 51, and the container opening unit 61 in stages according to the temperature measured by the temperature measurement unit 12, and the control unit 70 may control the heat removal medium circulation unit 35, the inert gas supply unit 41, the coolant supply unit 51, and the container opening unit 61 in stages as time passes. Specifically, the flow rate of the heat removal medium may be increased, and after a predetermined period of time passes, the inert gas may be supplied into the container 2. Similarly, the inert gas may be supplied into the container 2, and after a predetermined period of time passes, the coolant may be supplied into the container 2.

When the circulation path 33 includes a high temperature side path and a low temperature side path, during steady operation, the flow rate of the heat removal medium circulating through the high temperature side path is kept constant and the flow rate of the heat removal medium circulating through the low temperature side path is increased or decreased by the heat removal medium circulation unit 35, so that the amount of radiant heat dissipated from the heat generating element 5 can be increased or decreased, and the temperature of the heat generating element 5 can be controlled within a predetermined range.

When the temperature measured by the temperature measurement unit 12 reaches the predetermined first threshold, the flow rates of the heat removal medium circulating through the high temperature side path and the heat removal medium circulating through the low temperature side path are maximized (STEP 1). Therefore, the container 2 is cooled, the amount of radiant heat dissipated from the heat generating element 5 is increased, and the rise in temperature of the heat generating element 5 can be slowed down.

When the temperature measured by the temperature measurement unit 12 reaches a fourth threshold larger than the first threshold and smaller than the second threshold, the heat removal medium circulating through the high temperature side path and the low temperature side path is switched to a heat removal medium (for example, water) that has a large heat capacity and a high cooling effect (STEP 2). Therefore, the amount of radiant heat dissipated from the heat generating element 5 is further increased, and the rise in temperature of the heat generating element 5 that exceeds the fourth threshold can be further slowed down.

When the temperature measured by the temperature measurement unit 12 reaches the second threshold larger than the fourth threshold, as described above, the inert gas supply unit 41 supplies the inert gas into the container 2 (STEP 3). Therefore, the amount of radiant heat dissipated from the heat generating element 5 is further increased, and the rise in temperature of the heat generating element 5 that exceeds the second threshold can be further slowed down.

When the temperature measured by the temperature measurement unit 12 reaches the third threshold larger than the second threshold, as described above, the container opening unit 61 opens the container 2, and the coolant supply unit 51 supplies the coolant into the container 2 (STEP 4). In this way, the amount of radiant heat dissipated from the heat generating element 5 is further increased, and the heat generating element 5 can be cooled rapidly.

Although the embodiment and examples of the present invention have been described above, the present invention is not limited to the above-described embodiment and examples, and can be modified as appropriate within the scope of the spirit of the present invention.

### [First Modification]

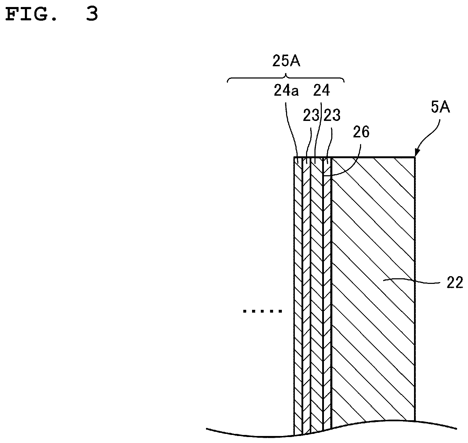

In the above embodiment, an example has been described in which the heat generating element 5 includes the multilayer film 25 in which the first layer 23 and the second layer 24 are alternately stacked, but the present invention is not limited thereto, and a heat generating element 5A shown in Fig. 3 may be used. The heat generating element 5A includes a multilayer film 25A formed by stacking, in addition to the first layer 23 and the second layer 24, a third layer 24a made of a hydrogen storage metal or a hydrogen storage alloy different from the first layer 23 and the second layer 24, or a ceramic. As with the first layer 23 and the second layer 24, a thickness of the third layer 24a is preferably less than 1000 nm.

The heat generating element 5A provided with such a third layer 24a has a stacking configuration in which the first layer 23, the second layer 24, the first layer 23, and the third layer 24a are stacked in order on the base 22, and the first layer 23 is interposed between the second layer 24 and the third layer 24a, and has a configuration in which this four-layer stacking configuration is repeatedly provided. Even in such a configuration, hydrogen passes through the heterogeneous material interface 26 between the first layer 23 and the second layer 24 and a heterogeneous material interface between the first layer 23 and the third layer 24a by quantum diffusion, so that excess heat equal to or higher than the heating temperature can be generated.

For example, it is preferable that the third layer 24a is made of one of Ni, Pd, Cu, Cr, Fe, Mg, Co, alloys thereof, SiC, CaO, Y₂O₃, TiC, LaB₆, SrO, and BaO. An alloy of the third layer 24a may be an alloy in which an additional element is added to Ni, Pd, Cu, Cr, Fe, Mg, or Co, but is particularly preferably an alloy containing two or more types of Ni, Pd, Cu, Cr, Fe, Mg, and Co. Among these, when the third layer 24a made of one of CaO, Y₂O₃, TiC, LaB₆, SrO, and BaO is provided, a storage amount of hydrogen in the heat generating element 5 increases, and the amount of hydrogen that passes through the heterogeneous material interfaces can be increased, which increases the excess heat to be obtained.

However, CaO, Y₂O₃, TiC, LaB₆, SrO, and BaO are difficult for hydrogen to pass, and therefore the third layer 24a made of one of CaO, Y₂O₃, TiC, LaB₆, SrO, and BaO preferably has a thickness of less than 1000 nm, and particularly preferably has an extremely small thickness of less than 10 nm. The third layer 24a made of one of CaO, Y₂O₃, TiC, LaB₆, SrO, and BaO may not be formed in a complete film shape but may be formed in an island shape. The first layer 23 and the third layer 24a are also continuously formed while maintaining a vacuum state, and it is preferable that a heterogeneous material interface is produced without forming a natural oxide film between the first layer 23 and the third layer 24a.

Note that the heat generating element 5A provided with such a third layer 24a may have a stacking configuration in which the second layer 24 and third layer 24a is stacked in any order, such as changing the order of the second layer 24 and the third layer 24a in Fig 3, and the first layer 23 is interposed between the second layer 24 and the third layer 24a, and also may have a configuration in which this four-layer stacking configuration is repeatedly provided. The third layer 24a may be formed for one or more layers in the heat generating element 5A.

Especially, as a combination of the first layer 23, the second layer 24, and the third layer 24a, when types of elements in the combination are expressed as "first layer 23-third layer 24a-second layer 24", it is preferably Pd-CaO-Ni, Pd-Y₂O₃-Ni, Pd-TiC-Ni, Pd-LaB₆-Ni, Ni-CaO-Cu, Ni-Y₂O₃-Cu, Ni-TiC-Cu, Ni-LaB₆-Cu, Ni-Co-Cu, Ni-CaO-Cr, Ni-Y₂O₃-Cr, Ni-TiC-Cr, Ni-LaB₆-Cr, Ni-CaO-Fe, Ni-Y₂O₃-Fe, Ni-TiC-Fe, Ni-LaB₆-Fe, Ni-Cr-Fe, Ni-CaO-Mg, Ni-Y₂O₃-Mg, Ni-TiC-Mg, Ni-LaB₆-Mg, Ni-CaO-Co, Ni-Y₂O₃-Co, Ni-TiC-Co, Ni-LaB₆-Co, Ni-CaO-SiC, Ni-Y₂O₃-SiC, Ni-TiC-SiC, and Ni-LaB₆-SiC.

### [Second Modification]

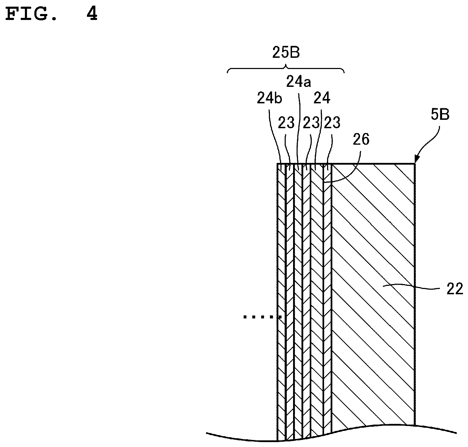

A heat generating element 5B shown in Fig. 4 may be used. The heat generating element 5B includes a multilayer film 25B formed by stacking, in addition to the first layer 23, the second layer 24, and the third layer 24a, a fourth layer 24b made of a hydrogen storage metal or a hydrogen storage alloy different from the first layer 23, the second layer 24, and the third layer 24a, or a ceramic. As with the first layer 23, the second layer 24, and the third layer 24a, a thickness of the fourth layer 24b is preferably less than 1000 nm.

For example, the fourth layer 24b may be made of one of Ni, Pd, Cu, Cr, Fe, Mg, Co, alloys thereof, SiC, CaO, Y₂O₃, TiC, LaB₆, SrO, and BaO. An alloy of the fourth layer 24b may be an alloy in which an additional element is added to Ni, Pd, Cu, Cr, Fe, Mg, or Co, but is particularly preferably an alloy containing two or more types of Ni, Pd, Cu, Cr, Fe, Mg, and Co.

It is preferable that the heat generating element 5B provided with the fourth layer 24b has a stacking configuration in which the second layer 24, the third layer 24a, and the fourth layer 24b are stacked in any order, and the first layer 23 is provided between each two of the second layer 24, the third layer 24a, and the fourth layer 24b, and has a configuration in which this six-layer stacking configuration is repeatedly provided. That is, it is preferable that the heat generating element 5B is formed by stacking in an order of the first layer 23, second layer 24, first layer 23, third layer 24a, first layer 23, and fourth layer 24b as shown in Fig. 4, or other orders (not shown) such as the first layer 23, fourth layer 24b, first layer 23, third layer 24a, first layer 23, and second layer 24. The fourth layer 24b may be formed for one or more layers in the heat generating element 5B.

Especially, as a combination of the first layer 23, the second layer 24, the third layer 24a, and the fourth layer 24b, when types of elements in the combination are expressed as "first layer 23-fourth layer 24b-third layer 24a-second layer 24", it is preferably Ni-CaO-Cr-Fe, Ni-Y₂O₃-Cr-Fe, Ni-TiC-Cr-Fe, and Ni-LaB₆-Cr-Fe.

When the fourth layer 24b made of one of CaO, Y₂O₃, TiC, LaB₆, SrO, and BaO is provided, the storage amount of hydrogen in the heat generating element 5B increases, and the amount of hydrogen that passes through the heterogeneous material interfaces can be increased, which increases the excess heat to be obtained. The fourth layer 24b made of one of CaO, Y₂O₃, TiC, LaB₆, SrO, and BaO preferably has a thickness of less than 1000 nm, and particularly preferably has an extremely small thickness of less than 10 nm. The fourth layer 24b made of one of CaO, Y₂O₃, TiC, LaB₆, SrO, and BaO may not be formed in a complete film shape but may be formed in an island shape. The first layer 23 and the fourth layer 24b are also continuously formed while maintaining a vacuum state, and it is preferable that a heterogeneous material interface is produced without forming a natural oxide film between the first layer 23 and the fourth layer 24b.

### Reference Signs List

- 1: heat generating device
- 2: container
- 5, 5A, 5B: heat generating element
- 6: heater
- 11a, 11b, 12: temperature measurement unit
- 33: circulation path
- 35: heat removal medium circulation unit
- 41: inert gas supply unit
- 51: coolant supply unit
- 61: container opening unit
- 70: control unit

## Claims

1. A heat generating device, comprising:
a heat generating element that is capable of occluding hydrogen and generating heat using a heat generating reaction by quantum diffusion of the hydrogen;
a heater that heats the heat generating element to cause quantum diffusion of the hydrogen in the heat generating element;
a container that accommodates the heat generating element and the heater;
a heat removal medium circulation unit that circulates a heat removal medium through a circulation path provided on an outer periphery of the container;
an inert gas supply unit that supplies an inert gas for cooling the heat generating element into the container;
a coolant supply unit that supplies a coolant for cooling the heat generating element into the container; and
a container opening unit that opens the container.

2. The heat generating device according to claim 1, wherein
the coolant supply unit supplies a zinc-containing solution as the coolant into the container.

3. The heat generating device according to claim 1 or 2, further comprising:
a control unit that controls the heat removal medium circulation unit, the inert gas supply unit, the coolant supply unit, and the container opening unit, wherein
the control unit increases a flow rate of the heat removal medium by the heat removal medium circulation unit, then supplies the inert gas into the container by the inert gas supply unit, and then opens the container by the container opening unit and supplies the coolant into the container by the coolant supply unit.

4. The heat generating device according to claim 3, further comprising:
a temperature measurement unit that measures a temperature inside the container, wherein
the control unit causes the heat removal medium circulation unit to increase the flow rate of the heat removal medium when the temperature measured by the temperature measurement unit reaches a predetermined first threshold, and causes the inert gas supply unit to supply the inert gas into the container when the temperature measured by the temperature measurement unit reaches a second threshold larger than the first threshold, and causes the container opening unit to open the container and causes the coolant supply unit to supply the coolant into the container when the temperature measured by the temperature measurement unit reaches a third threshold larger than the second threshold.

5. A method for cooling a heat generating element that is capable of occluding hydrogen and generating heat using a heat generating reaction by quantum diffusion of the hydrogen caused by heat from a heater, the method comprising:
increasing a flow rate of a heat removal medium circulating through a circulation path provided on an outer periphery of a container that accommodates the heat generating element;
supplying an inert gas for cooling the heat generating element into the container after increasing the flow rate of the heat removal medium; and
opening the container and supplying a coolant for cooling the heat generating element into the container after supplying the inert gas into the container.

6. The method for cooling a heat generating element according to claim 5, wherein
a zinc-containing solution is used as the coolant.
